(19) **Europäisches Patentamt**
**European Patent Office**
**Office européen des brevets**

(11) **EP 2 706 326 B1**

(12) **EUROPEAN PATENT SPECIFICATION**

(45) Date of publication and mention
of the grant of the patent:
**16.12.2015 Bulletin 2015/51**

(51) Int Cl.:
***G01D 5/14*** *(2006.01)*

(21) Application number: **12183495.6**

(22) Date of filing: **07.09.2012**

(54) **Sensor system, steering control system and method for determining a rotation angle**

Sensorsystem, Lenksteuerungssystem und Verfahren zur Bestimmung eines Drehwinkels

Système de capteur, système de commande de direction et procédé pour déterminer un angle de rotation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.03.2014 Bulletin 2014/11**

(73) Proprietor: **ams AG**
**8141 Unterpremstätten (AT)**

(72) Inventors:
• **Wiednig, Gerald**
**8510 Stainz (AT)**
• **Urban, Marcel**
**8072 Fernitz (AT)**
• **Brandl, Manfred**
**8112 Gratwein (AT)**

(74) Representative: **Epping - Hermann - Fischer Patentanwaltsgesellschaft mbH**
**Schloßschmidstraße 5**
**80639 München (DE)**

(56) References cited:
**DE-A1- 10 348 914       US-A1- 2009 322 320**
**US-A1- 2010 163 333**

**Description**

The invention relates to a sensor system, which is to be used with an arrangement comprising a rotatable axis, to a steering control system for a vehicle with such a sensor system, and to a method for determining an absolute rotation angle.

In various applications a magnetic field intensity is evaluated to determine a rotation of an rotatable object within the range of one full rotation. In some applications it is desired to determine an absolute rotation angle for objects rotating more than one full rotation, i.e. more than 360°. For example, such applications include the determination of a rotation angle of a steering wheel, which may be rotatable in a range from e.g. -720° to +720°

Sensor systems according to the prior art are disclosed in the documents US2010/0163333, US2009/0322320 and DE10348914.

An object to be solved is to provide an efficient concept for determining an absolute rotation angle of multi-turn rotatable systems.

This object is achieved with the subject matter of the independent claims. Developments and embodiments are defined in the dependent claims.

The efficient concept is based on the idea that an absolute rotation angle of a rotatable axis is determined in at least two steps. In one step, a relative rotation angle of the rotatable axis is determined by evaluating the magnetic field of a bipolar ring magnetic rotating with the rotatable axis. In another step, the rotational movement of the axis is translated into a longitudinal movement of the ring magnet along the axis, and the longitudinal position of the ring magnet is determined by evaluating the magnetic field of the ring magnet with a first and a second sensor element being arranged space apart from each other, preferably along the axis. The translation of the rotational movement into the longitudinal movement may be performed by respective shifting means. The absolute rotation angle is calculated from the relative rotation angle and the longitudinal position. As a consequence, the absolute rotation angle resulting from the relative rotation angle and the longitudinal position information covers a range of more than one full rotation. Hence, the efficient concept is achieved with little mechanical and electronic effort.

According to one embodiment of the efficient concept, a sensor system is to be used with an arrangement comprising a rotatable axis that is arranged rotatable within a stator, a ring magnet that is mounted to the rotatable axis for co-rotation and longitudinally shiftable, and shifting means for translating a rotational movement of the rotatable axis into a longitudinal movement of the ring magnet. The sensor system comprises a first sensor element and a second sensor element, each for detecting a multi-dimensional magnetic field intensity and each configured to provide respective sensor values for at least two spatial dimensions. The first sensor element and the second sensor element are arranged spaced apart from each other, for example along or parallel to the rotatable axis. The sensor system further comprises an evaluation circuit. The evaluation circuit is configured to determine a relative rotation angle associated with the rotatable axis based on the sensor values of at least one of the first sensor element and the second sensor element, to determine a longitudinal position information of the ring magnet with respect to the rotatable axis based on the sensor values of both of the first sensor element and the second sensor element, and to determine an absolute rotation angle associated with the rotatable axis based on the relative rotation angle and the longitudinal position information. Hence, the absolute rotation angle covers a range of more than one full rotation.

The first and the second sensor element are to be arranged in direct vicinity to the ring magnet, for example within the stator. The sensor elements can be provided as single sensor elements on separate chips, but can be combined on a common integrated circuit as well. The evaluation circuit may also be arranged on such integrated circuit, for example at the stator, or be external to the stator.

In one implementation form of the sensor system, each of the first sensor element and the second sensor element is configured to provide a first sensor value associated with a first spatial dimension and a second sensor value associated with a second spatial dimension. For example, the two spatial dimensions are two dimensions of a Cartesian coordinate system. Preferably, the first spatial dimension and the second spatial dimension are each perpendicular to the rotation axis of the ring magnet and are perpendicular to each other. Hence, the first and the second spatial dimension span a Cartesian coordinate system together with the rotation axis of the ring magnet, which preferably is the same as the rotation axis of the rotatable axis.

Additionally, the first spatial dimension may be perpendicular to a common surface plane of the first sensor element and the second sensor element.

In various embodiments of the sensor system, the evaluation circuit is configured to determine the longitudinal position information based on a ratio between the first sensor values of the first sensor element and the second sensor element. This ratio changes during the longitudinal movement of the ring magnet along the rotatable axis, such that each ratio value corresponds to a longitudinal position of the ring magnet with respect to the rotatable axis.

Furthermore, according to various embodiments of the sensor system, the evaluation circuit is configured to determine the relative rotation angle based on at least one of the following:

A ratio between a second sensor value of the first sensor element and the first sensor value of the first sensor element; a ratio between the second sensor value of the second sensor element and the first sensor value of the second sensor element; a ratio between a sum of the second sensor values of the first and second sensor element and a sum of the first sensor values of the first and the second sensor element.

Hence, in each of the three cases, a ratio between the magnetic intensity along the second spatial dimension and the magnetic intensity along the first spatial dimension is evaluated to determine the relative rotation angle. It is apparent that the usage of the sensor values of both sensor elements delivers more accurate results, while using sensor signals of only one sensor element still delivers usable results.

According to various embodiments of the sensor system, the evaluation circuit is configured to determine the longitudinal position information and/or the relative rotation angle based on the arctangent function.

According to one specific implementation form of the sensor system, the evaluation circuit is configured to determine an offset angle based on the longitudinal position information and to determine the absolute rotation angle by adding the offset angle and the relative rotation angle.

For example, the evaluation circuit is configured to determine the offset angle based on the longitudinal position information by means of a lookup table. The lookup table may associate the longitudinal position information with respective offset angles, wherein the same offset angle may be returned for a greater number of different, but neighboring, longitudinal position information. The evaluation circuit may further be configured to determine the offset angle by comparing the longitudinal position information with a plurality of value ranges, which each are associated with a specific offset value. The offset angles may be multiples of 360° with or without an additive constant.

In various embodiments of the sensor system, the sensor system further comprises the stator, the ring magnet and the shifting means. Hence, such sensor system can be mounted to a rotatable axis such that the resulting arrangement can be achieved with little effort.

Additionally, the sensor system can comprise the rotatable axis, wherein the shifting means comprise a longitudinal slot and the axis comprises a key for interacting with the slot, or wherein the axis comprises a longitudinal slot and the shifting means comprise a key for interacting with the slot. In both cases, the co-rotation between ring magnet and rotatable axis is achieved by the slot-key connection. Additionally, the key is movable within the slot such that the longitudinal movement of the ring magnet along the rotatable axis is assured.

For example, the shifting means comprise an outer thread that interacts with an inner thread of the stator, such that a rotational movement of the shifting means is translated into an additional longitudinal movement of the shifting means. In other words, the shifting means may rotate within the stator and execute a longitudinal movement at the same time.

The various embodiments of the sensor system described above can be used when ever an absolute rotation angle of a multi-turn rotatable axis needs to be determined, for example with an axis of a steering wheel or the like. In particular, an exact absolute rotation angle can be determined when powering on the sensor system, without the need of saving a previous position in advance. Hence, the sensor system may also be used in security and safety critical applications.

For example, a steering control system for a vehicle is provided with a sensor system according to one of the embodiments described above.

The efficient concept described above can also be used within a method for determining an absolute rotation angle. Such a method is to be used with an arrangement comprising a rotatable axis that is arranged rotatable within a stator, a ring magnet that is mounted to the rotatable axis for co-rotation and longitudinally shiftable, shifting means for translating a rotational movement of the rotatable axis into a longitudinal movement of the ring magnet, and a first sensor element and a second sensor element being arranged spaced apart from each other, each for detecting a multi-dimensional magnetic field intensity.

An embodiment of the method comprises generating respective sensor values for at least two spatial dimensions by means of the first sensor element and the second sensor element. A relative rotation angle associated with the rotatable axis is determined based on the sensor values of at least one of the first sensor element and the second sensor element. A longitudinal position information of the ring magnet is determined with respect to the rotatable axis based on the sensor values of both of the first sensor element and the second sensor element. An absolute rotation angle associated with the rotatable axis is determined based on the relative rotation angle and the longitudinal position information, wherein the absolute rotation angle covers a range of more than one full rotation.

In an embodiment of the method, the absolute rotation angle is determined by determining an offset angle based on the longitudinal position information and by determining the absolute rotation angle by adding the offset angle and the relative rotation angle.

Further embodiments of the method become apparent from the various embodiments of the sensor system described above.

The text below explains the invention in detail using exemplary embodiments with reference to the drawings. Same references are used for same elements or elements having a similar function in the various figures. Hence, the description of elements in one figure is not repeated in the following figures.

In the drawings:

Figure 1 shows an exemplary embodiment of a sensor system with a rotatable axis,

Figure 2 shows a cross-sectional view of the embodiment of Figure 1 along lines A-A',

Figure 3 shows a cross-sectional view of the embodiment of Figure 1 along lines B-B',

Figure 4 shows an embodiment of an integrated circuit with sensor elements,

Figure 5 shows a signal diagram with a longitudinal position information and a relative rotation angle,

Figure 6 shows a block diagram of an embodiment of a sensor system, and

Figure 7 shows a cross-sectional view of a further embodiment of a sensor system.

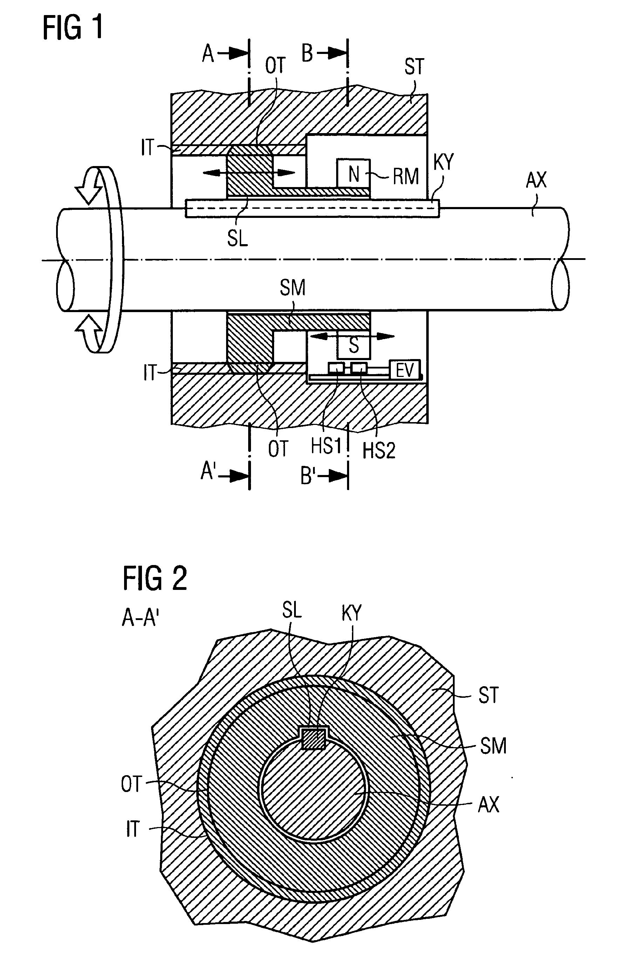

Figure 1 shows an embodiment of a sensor system with a rotatable axis AX. The rotatable axis AX is arranged rotatable within a stator ST. Bearings for the axis AX may be arranged within the stator ST or elsewhere, but are omitted in the drawing of Figure 1 for the reasons of a better overview. The sensor system further comprises shifting means SM which have an outer thread OT that is engaged to an inner thread IT of the stator ST. The shifting means SM have a longitudinal slot SL, which interacts with a key KY mounted fixedly to the axis AX or being part of the axis AX. A ring magnet RM is fixedly mounted to the shifting means SM, such that the ring magnet RM rotates with the shifting means SM. A first sensor element HS1 and a second sensor element HS2 are fixedly arranged with the stator ST under the ring magnet RM. The ring magnet RM is a bipolar magnet with its north- and south-poles indicated in the drawing by respective letters N and S. An evaluation circuit EV is connected to the first and the second sensor element HS1, HS2.

The first and the second sensor element are each configured for detecting a multidimensional magnetic field intensity and each provide respective sensor values for at least two spatial dimensions. As can be seen from Figure 1, the sensor elements HS1, HS2 are arranged spaced apart from each other, in particular basically parallel to a rotation axis of the rotatable axis AX.

The sensor elements HS1, HS2 preferably are based on the Hall sensor principle and are able to detect two or three magnetic field components of different spatial directions, wherein the magnetic field detected is particularly generated by the ring magnet RM.

With reference to Figure 2, a cross-sectional view along the line A-A' of the embodiment of Figure 1 is shown. From this perspective it can be seen that the key KY on the axis AX fits into the slot SL of the shifting means SM, such that the shifting means SM co-rotate with the axis AX. Furthermore, the inner thread IT of the stator ST and the outer thread OT of the shifting means SM interact such that a rotation of the axis AX or the shifting means SM, respectively, produces a longitudinal movement of the shifting means SM along the axis AX. This longitudinal movement is possible, as the slot-key connection between axis AX and shifting means SM does not prevent the longitudinal movement.

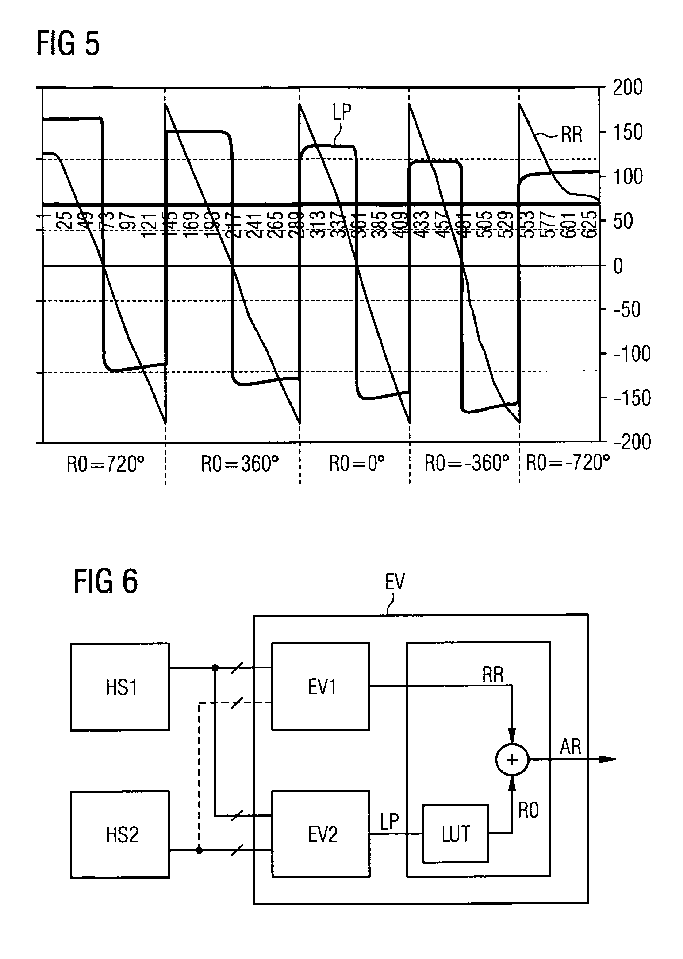

Referring back to Figure 1, the longitudinal movement of the shifting means SM provides the movement of the ring magnet RM over the sensing elements HS1, HS2. For example, if the ring magnet RM is moved to the right, the field intensity over the first sensor element HS1 decreases while it increases for the second sensor element HS2. Similarly, if the ring magnet RM moves to the left, the magnetic field intensity over the first sensor element HS1 increases while it decreases over the second sensor element HS2. The ratio of the field intensities can be used to determine a longitudinal position information LP, which will be explained in more detail in conjunction with Figure 5.

In an alternative embodiment, a slot can be provided within the axis AX and a key can be provided on the inner side of the shifting means SM, which also results that a rotational movement of the axis AX and the shifting means SM is translated into a longitudinal movement of the shifting means SM.

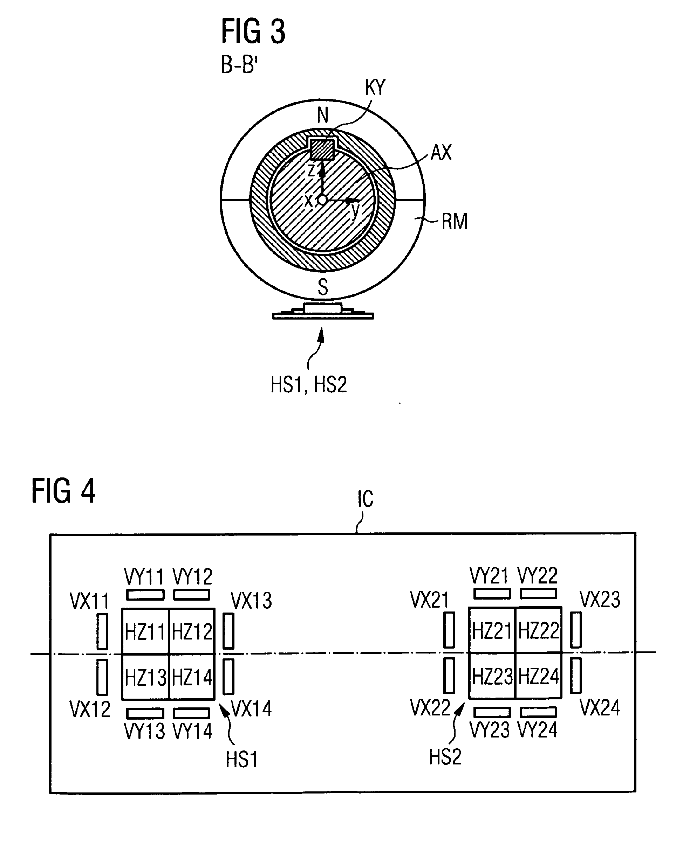

Referring now to Figure 3, a cross-sectional view of the embodiment of Figure 1 along the line B-B' is shown. The ring magnet RM, fixedly mounted to the shifting means SM, rotates with the axis AX over the sensor elements HS1, HS2. It is apparent that one of the sensor elements is hidden by the other one from this perspective. In the drawing of Figure 3, the three spatial dimensions x, y, z are indicated by respective arrows and a circle. In particular, the x-dimension goes into the drawing, thus is parallel to the rotation axis of the axis AX. The y-dimension points to the right, while the z-dimension points to the top of the drawing. Together, the three dimensions x, y, z span a Cartesian coordinate system.

For determining the relative rotation angle, the z-component and the y-component of the magnetic field may be used, for example. In particular, the relative rotation angle can be calculated by means of an arctangent function of a ratio of a sensor value associated with the y-component and the sensor value associated with the z-component.

Referring back to Figure 1, the longitudinal position information can be determined based on the ratio between the z-components of both the first and the second sensor element HS1, HS2.

Figure 4 shows an exemplary embodiment of an integrated circuit IC comprising both the first and the second sensor element HS1, HS2, which are arranged spaced apart from each other and along a line that preferably is parallel to the rotatable axis AX or the x-component. Each of the sensor elements HS1, HS2 is formed of several Hall sensor elements, which allow detection of a three dimensional magnetic field.

For example, the first sensor element HS1 comprises sensor elements VX11, VX12, VX13, VX14, each for detecting the x-component of the magnetic field, and each formed by vertical Hall sensor element. Similarly, the first sensor element HS1 comprises vertical Hall sensor elements VY11, VY12, VY13, VY14 for sensing the y-component of the magnetic field. The sensor element HS1 further comprises lateral Hall sensor elements HZ11, HZ12, HZ13, HZ14 for detecting the z-component of the magnetic field. In a similar fashion, the second sensor element HS2 comprises corresponding vertical Hall sensor elements VX21, VX22, VX23, VX24 for sensing the x-component of the magnetic field, vertical Hall sensor elements VY21, VY22, VY23, VY24 for sensing the y-component of the magnetic field, and lateral Hall sensor elements HZ21, HZ22, HZ23, HZ24 for sensing the z-component of the magnetic field.

It should be noted that various embodiments of the sensor system, the vertical Hall sensor elements VX11 to VX24 can be left out such that only Hall sensor elements for the y-component and the z-component are present. Further circuits and wiring on the integrated circuit IC may be present but are left out here for the reasons of a better overview.

One exemplary way to calculate the relative rotation angle RR of the axis AX within the evaluation circuit EV is to use the formula

$$(1) \qquad RR = ATAN2((PY1+PY2);(PZ1+PZ2)) \cdot \frac{180°}{\pi},$$

wherein ATAN2 is a well known variation of the arctangent function, which takes into account the signs of the respective arguments, PY1 is a sensor value from the first sensor element HS1 corresponding to the y-component, PY2 is a sensor value of the second sensor element HS2 corresponding to the y-component, PZ1 is a sensor value of the first sensor element HS1 corresponding to the z-component and PZ2 is a sensor value of the second sensor element HS2 corresponding to the z-component.

It should be noted that in different embodiments, the above equation can be modified by using sensor values of only the first sensor element HS1 or only the second sensor element HS2 without forming the sum of sensor values of both sensor elements HS1, HS2. In any case, the above equation (1) delivers a relative rotation angle RR between -180° and +180°.

A linear position information LP can be calculated according to the formula

$$(2) \qquad LP = ATAN2(PZ1;PZ2) \cdot \frac{180°}{\pi},$$

with the notations of equation (1) described above.

Figure 5 shows an exemplary diagram of the linear position information LP and the relative rotation angle RR over several turns of the rotatable axis AX. It can be seen that the relative rotation angle periodically repeats the limited rotation range of -180° to +180°. The linear position information LP basically is block-wise constant or almost constant in different ranges. However, neighboring values differ by their absolute value.

Accordingly, from the absolute value or the range of the absolute value of the linear position information, it can be deducted to the absolute longitudinal position of the shifting means SM or the ring magnet RM, respectively. As a result, each longitudinal position can be associated with an offset angle R0. For example, the left most block or value range is associated with the offset angle R0 = 720°, the next value range is associated with the offset angle R0 = 360°, etc., up to the right most value range, which is associated with the offset angle R0 = -720°. The corresponding offset angle R0 may be determined by means of a lookup table LUT and/or by comparing the longitudinal position information LP with a plurality of value ranges, which are each associated with a specific offset value. A resulting absolute rotation angle may be calculated according to the formula

$$(3) \qquad AR = R0 + RR,$$

with AR being the absolute rotation angle.

Figure 6 shows an exemplary embodiment of an evaluation circuit EV connected to the sensor elements HS1, HS2. It should be noted that multiple sensor signals can be provided from the sensor elements HS1, HS2, for example associated with the different components of the magnetic field.

The evaluation circuit EV comprises a first evaluation block EV1, which is connected to the first sensor element HS1 and/or to the second sensor element HS2 for determining the relative rotation angle RR, for example according to equation (1).

The evaluation circuit EV further comprises a second evaluation block EV2 which is connected to both the first and the second sensor element HS1, HS2. The second evaluation block EV2 is configured to determine the linear position information LP, for example according to equation (2). As mentioned before, the linear position information LP may be provided to a lookup table LUT which provides the offset angle R0, which is added to the relative rotation angle RR according to equation (3).

The evaluation circuit EV can be integrated with the sensor elements HS1, HS2, for example on the integrated circuit IC. However, the evaluation circuit EV can also be positioned away from the sensor elements, for example as part of a controller or the like.

A sensor system according to one of the embodiments described above may be used with a steering control system for a vehicle, wherein the rotating axis AX for example is a steering shaft of the vehicle. However, the sensor system is not limited to such application but can be used with any rotating axis, for which an absolute rotation angle needs to be determined. No intermediate storage of a position information is necessary according to the described embodiments.

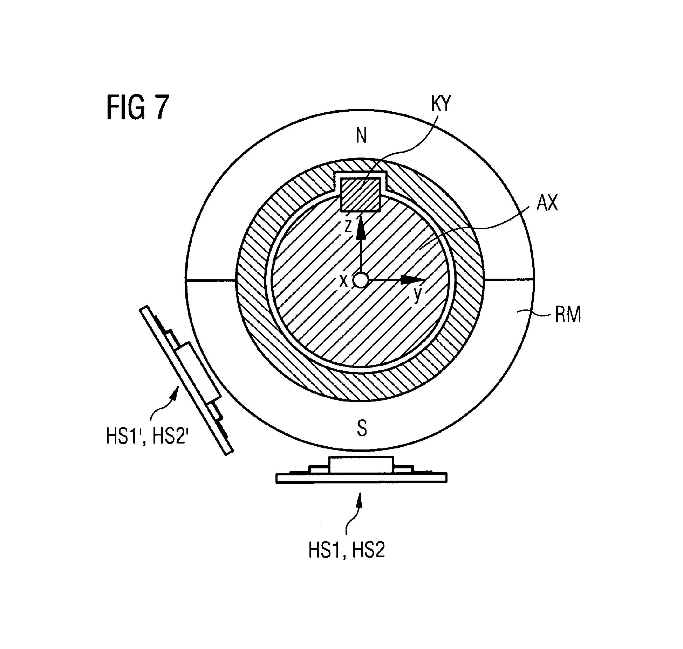

In some applications, for example in automotive applications, it may be necessary to provide a redundancy concept in order to prevent a full failure of the complete system. Figure 7 shows an exemplary embodiment of a sensor system with such a redundancy concept, which is based on the embodiment of Figure 3 in conjunction with Figure 1. In the embodiment of Figure 7, a second set of sensor elements HS1', HS2' is provided at a position rotated with respect to the set of sensor elements HS1, HS2.

Both sets may be constructed identically, such that with each set alone, the absolute rotation angle can be determined. Calibration may be necessary for each of the sets in order to provide the same results. The evaluation of the respective sensor signals may be performed in the same evaluation circuit. In particular, both sets of sensor elements may be evaluated, respectively, and compared to each other, for example. If deviations between the evaluation results occur during operation, failure of one of the sets may be assumed.

In various embodiments, a torque sensor may also be integrated with the sensor elements HS1, HS2 to achieve a sensor unit with a small form factor.

Reference List

| AX | axis |
| ST | stator |
| RM | ring magnet |
| SM | shifting means |
| HS1, HS2, HS1', HS2' | sensor element |
| x, y, z | spatial dimension |
| EV | evaluation circuit |
| RR | relative rotation angle |
| LP | longitudinal position information |
| AR | absolute rotation angle |
| IT | inner thread |
| OT | outer thread |
| SL | slot |
| KY | key |
| EV1, EV2 | evaluation block |
| LUT | lookup table |
| R0 | offset angle |

Claims

1. Sensor system, which is to be used with an arrangement comprising a rotatable axis (AX) that is arranged rotatable within a stator (ST), a ring magnet (RM) that is mounted to the rotatable axis (AX) for co-rotation and longitudinally shiftable, and shifting means (SM) for translating a rotational movement of the rotatable axis (AX) into a longitudinal movement of the ring magnet (RM), the sensor system comprising

- a first sensor element (HS1) and a second sensor element (HS2), each for detecting a multi-dimensional magnetic field intensity and each configured to provide respective sensor values (PX1, PX2, PY1, PY2, PZ1, PZ2) for at least two spatial dimensions (x, y, z), the first sensor element (HS1) and the second sensor element (HS2) being arranged spaced apart from each other; and
- an evaluation circuit (EV) that is configured

-- to determine a relative rotation angle (RR) associated with the rotatable axis (AX) based on the sensor values (PX1, PX2, PY1, PY2, PZ1, PZ2) of at least one of the first sensor element (HS1) and the second sensor element (HS2);
-- to determine a longitudinal position information (LP) of the ring magnet (RM) with respect to the rotatable axis (AX) based on the sensor values (PX1, PX2, PY1, PY2, PZ1, PZ2) of both of the first sensor element (HS1) and the second sensor element (HS2); and
-- to determine an absolute rotation angle (AR) associated with the rotatable axis (AX) based on the relative rotation angle (RR) and the longitudinal position information (LP), the absolute rotation angle (AR) covering a range of more than one full rotation.

2. Sensor system according to claim 1,
   wherein each of the first sensor element (HS1) and the second sensor element (HS2) is configured to provide a first sensor value (PZ1, PZ2) associated with a first spatial dimension (z) and a second sensor value (PY1, PY2) associated with a second spatial dimension (y).

3. Sensor system according to claim 2,
   wherein the first spatial dimension (z) and the second spatial dimension (y) are each perpendicular to the rotation axis of the ring magnet (RM) and are perpendicular to each other.

4. Sensor system according to claim 3,
   wherein the first spatial dimension (z) is perpendicular to a common surface plane of the first sensor element (HS1) and the second sensor element (HS2).

5. Sensor system according to one of claims 2 to 4,
   wherein the evaluation circuit (EV) is configured to determine the longitudinal position information (LP) based on a ratio between the first sensor values (PZ1, PZ2) of the first sensor element (HS1) and the second sensor element (HS2).

6. Sensor system according to one of claims 2 to 5,
   wherein the evaluation circuit (EV) is configured to determine the relative rotation angle (RR) based on at least one of the following:

   - a ratio between the second sensor value (PY1) of the first sensor element (HS1) and the first sensor value (PZ1) of the first sensor element (HS1);
   - a ratio between the second sensor value (PY2) of the second sensor element (HS2) and the first sensor value (PZ2) of the second sensor element (HS2);
   - a ratio between a sum of the second sensor values (PY1, PY2) of the first and second sensor element (HS1, HS2) and a sum of the first sensor values (PZ1, PZ2) of the first and second sensor element (HS1, HS2).

7. Sensor system according to one of claims 2 to 6,
   wherein the evaluation circuit (EV) is configured to determine the longitudinal position information (LP) and/or the relative rotation angle (RR) based on the arctangent function.

8. Sensor system according to one of claims 1 to 7,
   wherein the evaluation circuit (EV) is configured to determine an offset angle (R0) based on the longitudinal position information (LP) and to determine the absolute rotation angle (AR) by adding the offset angle (R0) and the relative rotation angle (RR).

9. Sensor system according to claim 8,
   wherein the evaluation circuit (EV) is configured to determine the offset angle (R0) based on the longitudinal position information (LP) by means of a lookup-table (LUT) and/or by comparing the longitudinal position information (LP) with a plurality of value ranges, which each are associated with a specific offset value.

10. Sensor system according to one of claims 1 to 9, further comprising the stator (ST), the ring magnet (RM) and the shifting means (SM).

11. Sensor system according to claim 10,
further comprising the rotatable axis (AX), wherein

- the shifting means (SM) comprise a longitudinal slot (SL) and the axis comprises a key (KY) for interacting with the slot; or
- the axis comprises a longitudinal slot (SL) and the shifting means (SM) comprise a key (KY) for interacting with the slot.

12. Sensor system according to claim 10 or 11,
wherein the shifting means (SM) comprise an outer thread (OT) that interacts with an inner thread (IT) of the stator (ST), such that a rotational movement of the shifting means (SM) is translated into an additional longitudinal movement of the shifting means (SM).

13. Steering control system for a vehicle with a sensor system according to one of claims 10 to 12.

14. Method for determining an absolute rotation angle, the method to be used with an arrangement comprising a rotatable axis (AX) that is arranged rotatable within a stator (ST), a ring magnet (RM) that is mounted to the rotatable axis (AX) for co-rotation and longitudinally shiftable, shifting means (SM) for translating a rotational movement of the rotatable axis (AX) into a longitudinal movement of the ring magnet (RM), and a first sensor element (HS1) and a second sensor element (HS2) being arranged spaced apart from each other, each for detecting a multi-dimensional magnetic field intensity, the method comprising:

- generating respective sensor values (PX1, PX2, PY1, PY2, PZ1, PZ2) for at least two spatial dimensions (x, y, z) by means of the first sensor element (HS1) and the second sensor element (HS2);
- determining a relative rotation angle (RR) associated with the rotatable axis (AX) based on the sensor values (PX1, PX2, PY1, PY2, PZ1, PZ2) of at least one of the first sensor element (HS1) and the second sensor element (HS2);
- determining a longitudinal position information (LP) of the ring magnet (RM) with respect to the rotatable axis (AX) based on the sensor values (PX1, PX2, PY1, PY2, PZ1, PZ2) of both of the first sensor element (HS1) and the second sensor element (HS2); and
- determining an absolute rotation angle (AR) associated with the rotatable axis (AX) based on the relative rotation angle (RR) and the longitudinal position information (LP), the absolute rotation angle (AR) covering a range of more than one full rotation.

15. Method according to claim 14,
wherein determining the absolute rotation angle (AR) comprises to determine an offset angle (R0) based on the longitudinal position information (LP) and to determine the absolute rotation angle (AR) by adding the offset angle (R0) and the relative rotation angle (RR).

**Patentansprüche**

1. Sensorsystem, das bei einer Anordnung zu verwenden ist, die eine drehbewegliche Achse (AX), die drehbar in einem Stator (ST) angeordnet ist, einen Ringmagneten (RM), der zur gemeinsamen Drehung und längs verschiebbar an der drehbeweglichen Achse (AX) angebracht ist, und Verschiebungseinrichtungen (SM) umfasst, um eine Drehbewegung der drehbeweglichen Achse (AX) in eine Längsbewegung des Ringmagneten (RM) zu übersetzen, wobei das Sensorsystem umfasst:

- ein erstes Sensorelement (HS1) und ein zweites Sensorelement (HS2), wovon jedes zum Erfassen der Stärke eines mehrdimensionalen Magnetfelds bestimmt und jedes dazu ausgelegt ist, jeweilige Sensorwerte (PX1, PX2, PY1, PY2, PZ1, PZ2) für mindestens zwei räumliche Dimensionen (x, y, z) zu liefern, wobei das erste Sensorelement (HS1) und das zweite Sensorelement (HS2) voneinander beabstandet angeordnet sind; und

- eine Auswertungsschaltung (EV), die dazu ausgelegt ist,

-- einen mit der drehbeweglichen Achse (AX) zusammenhängenden relativen Drehwinkel (RR) auf Grundlage der Sensorwerte (PX1, PX2, PY1, PY2, PZ1, PZ2) des ersten Sensorelements (HS1) und/oder des zweiten Sensorelements (HS2) zu bestimmen;
-- eine Längspositionsinformation (LP) des Ringmagneten (RM) in Bezug auf die drehbewegliche Achse (AX) auf Grundlage der Sensorwerte (PX1, PX2, PY1, PY2, PZ1, PZ2) sowohl des ersten Sensorelements (HS1) als auch des zweiten Sensorelements (HS2) zu bestimmen; und
-- einen mit der drehbeweglichen Achse (AX) zusammenhängenden absoluten Drehwinkel (AR) auf Grundlage des relativen Drehwinkels (RR) und der Längspositionsinformation (LP) zu bestimmen, wobei der absolute Drehwinkel (AR) einen Bereich von mehr als einer vollen Drehung abdeckt.

2. Sensorsystem nach Anspruch 1,
wobei das erste Sensorelement (HS1) und das zweite Sensorelement (HS2) jeweils dazu ausgelegt ist, einen ersten Sensorwert (PZ1, PZ2), der mit einer ersten räumlichen Dimension (z) zusammenhängt, und einen zweiten Sensorwert (PY1, PY2) zu liefern, der mit einer zweiten räumlichen Dimension (y) zusammenhängt.

3. Sensorsystem nach Anspruch 2,
wobei die erste räumliche Dimension (z) und die zweite räumliche Dimension (y) jeweils senkrecht zur Drehachse des Ringmagneten (RM) und senkrecht zueinander sind.

4. Sensorsystem nach Anspruch 3,
wobei die erste räumliche Dimension (z) senkrecht zu einer gemeinsamen Flächenebene des ersten Sensorelements (HS1) und des zweiten Sensorelements (HS2) ist.

5. Sensorsystem nach einem der Ansprüche 2 bis 4, wobei die Auswertungsschaltung (EV) dazu ausgelegt ist, die Längspositionsinformation (LP) auf Grundlage eines Verhältnisses zwischen den ersten Sensorwerten (PZ1, PZ2) des ersten Sensorelements (HS1) und des zweiten Sensorelements (HS2) zu bestimmen.

6. Sensorsystem nach einem der Ansprüche 2 bis 5, wobei die Auswertungsschaltung (EV) dazu ausgelegt ist, den relativen Drehwinkel (RR) auf Grundlage mindestens eines der folgenden Punkte zu bestimmen:

- eines Verhältnisses zwischen dem zweiten Sensorwert (PY1) des ersten Sensorelements (HS1) und dem ersten Sensorwert (PZ1) des ersten Sensorelements (HS1);
- eines Verhältnisses zwischen dem zweiten Sensorwert (PY2) des zweiten Sensorelements (HS2) und dem ersten Sensorwert (PZ2) des zweiten Sensorelements (HS2);
- eines Verhältnisses zwischen einer Summe der zweiten Sensorwerte (PY1, PY2) des ersten und zweiten Sensorelements (HS1, HS2) und einer Summe der ersten Sensorwerte (PZ1, PZ2) des ersten und zweiten Sensorelements (HS1, HS2).

7. Sensorsystem nach einem der Ansprüche 2 bis 6,
wobei die Auswertungsschaltung (EV) dazu ausgelegt ist, die Längspositionsinformation (LP) und/oder den relativen Drehwinkel (RR) auf Grundlage der Arcustangensfunktion zu bestimmen.

8. Sensorsystem nach einem der Ansprüche 1 bis 7,
wobei die Auswertungsschaltung (EV) dazu ausgelegt ist, einen Versatzwinkel (R0) auf Grundlage der Längspositionsinformation (LP) zu bestimmen und den absoluten Drehwinkel (AR) zu bestimmen, indem der Versatzwinkel (R0) und der relative Drehwinkel (RR) addiert werden.

9. Sensorsystem nach Anspruch 8,
wobei die Auswertungsschaltung (EV) dazu ausgelegt ist, den Versatzwinkel (R0) auf Grundlage der Längspositionsinformation (LP) mittels einer Nachschlagtabelle (LUT) und/oder dadurch zu bestimmen, dass die Längspositionsinformation (LP) mit mehreren Wertebereichen verglichen wird, die jeweils mit einem spezifischen Versatzwert zusammenhängen.

10. Sensorsystem nach einem der Ansprüche 1 bis 9, darüber hinaus den Stator (ST), den Ringmagneten (RM) und die Verschiebungseinrichtungen (SM) umfassend.

**11.** Sensorsystem nach Anspruch 10,
darüber hinaus die drehbewegliche Achse (AX) umfassend, wobei

- die Verschiebungseinrichtungen (SM) einen Längsschlitz (SL) umfassen, und die Achse einen Keil (KY) umfasst, um mit dem Schlitz zu interagieren; oder
- die Achse einen Längsschlitz (SL) umfasst und die Verschiebungseinrichtungen einen Keil (KY) umfassen, um mit dem Schlitz zu interagieren.

**12.** Sensorsystem nach Anspruch 10 oder 11,
wobei die Verschiebungseinrichtungen (SM) ein Außengewinde (OT) umfassen, das mit einem Innengewinde (IT) des Stators (ST) so interagiert, dass eine Drehbewegung der Verschiebungseinrichtungen (SM) in eine zusätzliche Längsbewegung der Verschiebungseinrichtungen (SM) übersetzt wird.

**13.** Lenkungssteuerungssystem für ein Fahrzeug mit einem Sensorsystem nach einem der Ansprüche 10 bis 12.

**14.** Verfahren zum Bestimmen eines absoluten Drehwinkels, wobei das Verfahren bei einer Anordnung zu verwenden ist, die eine drehbewegliche Achse (AX), die drehbar in einem Stator (ST) angeordnet ist, einen Ringmagneten (RM), der zur gemeinsamen Drehung und längs verschiebbar an der drehbeweglichen Achse (AX) angebracht ist, Verschiebungseinrichtungen (SM), um eine Drehbewegung der drehbeweglichen Achse (AX) in eine Längsbewegung des Ringmagneten (RM) zu übersetzen, und ein erstes Sensorelement (HS1) und ein zweites Sensorelement (HS2) umfasst, die voneinander beabstandet angeordnet sind, wovon jedes zum Erfassen der Stärke eines mehrdimensionalen Magnetfelds bestimmt ist, wobei das Verfahren umfasst:

- Generieren jeweiliger Sensorwerte (PX1, PX2, PY1, PY2, PZ1, PZ2) für mindestens zwei räumliche Dimensionen (x, y, z) mittels des ersten Sensorelements (HS1) und des zweiten Sensorelements (HS2);
- Bestimmen eines relativen Drehwinkels (RR), der mit der drehbeweglichen Achse (AX) zusammenhängt, auf Grundlage der Sensorwerte (PX1, PX2, PY1, PY2, PZ1, PZ2) des ersten Sensorelements (HS1) und/oder zweiten Sensorelements (HS2);
- Bestimmen einer Längspositionsinformation (LP) des Ringmagneten (RM) in Bezug auf die drehbewegliche Achse (AX) auf Grundlage der Sensorwerte (PX1, PX2, PY1, PY2, PZ1, PZ2) sowohl des ersten Sensorelements (HS1) als auch des zweiten Sensorelements (HS2); und
- Bestimmen eines mit der drehbeweglichen Achse (AX) zusammenhängenden absoluten Drehwinkels (AR) auf Grundlage des relativen Drehwinkels (RR) und der Längspositionsinformation (LP), wobei der absolute Drehwinkel (AR) einen Bereich von mehr als einer vollen Drehung abdeckt.

**15.** Verfahren nach Anspruch 14,
wobei das Bestimmen des absoluten Drewinkels (AR) umfasst, einen Versatzwinkel (R0) auf Grundlage der Längspositionsinformation (LP) zu bestimmen und den absoluten Drehwinkel (SR) zu bestimmen, indem der Versatzwinkel (R0) und der relative Drehwinkel (RR) addiert werden.

## Revendications

**1.** Système de capteur, lequel est destiné à être utilisé avec un agencement comprenant un axe rotatif (AX) qui est agencé de manière rotative à l'intérieur d'un stator (ST), un aimant annulaire (RM) qui est monté sur l'axe rotatif (AX) pour la co-rotation et déplaçable longitudinalement, et des moyens de déplacement (SM) destinés à translater un mouvement de rotation de l'axe rotatif (AX) en un mouvement longitudinal de l'aimant annulaire (RM), le système de capteur comprenant

- un premier élément de capteur (HS1) et un deuxième élément de capteur (HS2), chacun étant destiné à détecter une intensité d'un champ magnétique multidimensionnelle et chacun étant configuré pour fournir des valeurs de capteur respectives (PX1, PX2, PY1, PY2, PZ1, PZ2) pour au moins deux dimensions spatiales (x, y, z), le premier élément de capteur (HS1) et le deuxième élément de capteur (HS2) étant agencés séparément l'un de l'autre; et
- un circuit d'évaluation (EV) qui est configuré

-- pour déterminer un angle de rotation relatif (RR) associé à l'axe rotatif (AX) sur la base des valeurs de capteur (PX1, PX2, PY1, PY2, PZ1, PZ2) d'au moins l'un du premier élément de capteur (HS1) et du deuxième élément de capteur (HS2);

-- pour déterminer une information de position longitudinale (LP) de l'aimant annulaire (RM) par rapport à l'axe rotatif (AX) sur la base des valeurs de capteur (PX1, PX2, PY1, PY2, PZ1, PZ2) à la fois du premier élément de capteur (HS1) et du deuxième élément de capteur (HS2); et

-- pour déterminer un angle de rotation absolu (AR) associé à l'axe rotatif (AX) sur la base de l'angle de rotation relatif (RR) et de l'information de position longitudinale (LP), l'angle de rotation absolu (AR) couvrant une plage de plus d'une rotation complète.

**2.** Système de capteur selon la revendication 1,
dans lequel chacun du premier élément de capteur (HS1) et du deuxième élément de capteur (HS2) est configuré pour fournir une première valeur de capteur (PZ1, PZ2) associée à une première dimension spatiale (z) et une deuxième valeur de capteur (PY1, PY2) associée à une deuxième dimension spatiale (y).

**3.** Système de capteur selon la revendication 2,
dans lequel la première dimension spatiale (z) et la deuxième dimension spatiale (y) sont chacune perpendiculaires à l'axe de rotation de l'aimant annulaire (RM) et sont perpendiculaires l'une à l'autre.

**4.** Système de capteur selon la revendication 3,
dans lequel la première dimension spatiale (z) est perpendiculaire à un plan de surface commun du premier élément de capteur (HS1) et du deuxième élément de capteur (HS2).

**5.** Système de capteur selon l'une des revendications 2 à 4,
dans lequel le circuit d'évaluation (EV) est configuré pour déterminer l'information de position longitudinale (LP) sur la base d'un rapport entre les premières valeurs de capteur (PZ1, PZ2) du premier élément de capteur (HS1) et du deuxième élément de capteur (HS2).

**6.** Système de capteur selon l'une des revendications 2 à 5,
dans lequel le circuit d'évaluation (EV) est configuré pour déterminer l'angle de rotation relatif (RR) sur la base d'au moins l'un des points suivants :

- un rapport entre la deuxième valeur de capteur (PY1) du premier élément de capteur (HS1) et la première valeur de capteur (PZ1) du premier élément de capteur (HS1);
- un rapport entre la deuxième valeur de capteur (PY2) du deuxième élément de capteur (HS2) et la première valeur de capteur (PZ2) du deuxième élément de capteur (HS2);
- un rapport entre une somme des deuxièmes valeurs de capteur (PY1, PY2) du premier et du deuxième élément de capteur (HS1, HS2) et une somme des premières valeurs de capteur (PZ1, PZ2) du premier et du deuxième élément de capteur (HS1, HS2).

**7.** Système de capteur selon l'une des revendications 2 à 6,
dans lequel le circuit d'évaluation (EV) est configuré pour déterminer l'information de position longitudinale (LP) et/ou l'angle de rotation relatif (RR) sur la base de la fonction arctangente.

**8.** Système de capteur selon l'une des revendications 1 à 7,
dans lequel le circuit d'évaluation (EV) est configuré pour déterminer un angle de décalage (R0) sur la base de l'information de position longitudinale (LP) et pour déterminer l'angle de rotation absolu (AR) en additionnant l'angle de décalage (R0) et l'angle de rotation relatif (RR).

**9.** Système de capteur selon la revendication 8,
dans lequel le circuit d'évaluation (EV) est configuré pour déterminer l'angle de décalage (R0) sur la base de l'information de position longitudinale (LP) au moyen d'une table de conversion (LUT) et/ou en comparant l'information de position longitudinale (LP) à une pluralité de plages de valeurs, qui sont chacune associées à une valeur de décalage spécifique.

**10.** Système de capteur selon l'une des revendications 1 à 9, comprenant en outre le stator (ST), l'aimant annulaire (RM) et les moyens de déplacement (SM).

**11.** Système de capteur selon la revendication 10, comprenant en outre l'axe rotatif (AX), sachant que

- les moyens de déplacement (SM) comprennent une fente longitudinale (SL) et l'axe comprend une clavette (KY) destinée à interagir avec la fente; ou
- l'axe comprend une fente longitudinale (SL) et les moyens de déplacement (SM) comprennent une clavette (KY) destinée à interagir avec la fente.

12. Système de capteur selon la revendication 10 ou 11, dans lequel les moyens de déplacement (SM) comprennent un filetage extérieur (OT) qui interagit avec un filetage intérieur (IT) du stator (ST), de sorte qu'un mouvement de rotation des moyens de déplacement (SM) soit translaté en un mouvement longitudinal supplémentaire des moyens de déplacement (SM).

13. Système de commande de direction pour un véhicule avec un système de capteur selon l'une des revendications 10 à 12.

14. Procédé permettant de déterminer un angle de rotation absolu, le procédé étant destiné à être utilisé avec un agencement comprenant un axe rotatif (AX) qui est agencé de manière rotative à l'intérieur d'un stator (ST), un aimant annulaire (RM) qui est monté sur l'axe rotatif (AX) pour la co-rotation et déplaçable longitudinalement, des moyens de déplacement (SM) destinés à translater un mouvement de rotation de l'axe rotatif (AX) en un mouvement longitudinal de l'aimant annulaire (RM), et un premier élément de capteur (HS1) et un deuxième élément de capteur (HS2) étant agencés séparément l'un de l'autre, chacun étant destiné à détecter une intensité d'un champ magnétique multidimensionnelle, le procédé comprenant :

- le fait de générer des valeurs de capteur respectives (PX1, PX2, PY1, PY2, PZ1, PZ2) pour au moins deux dimensions spatiales (x, y, z) au moyen du premier élément de capteur (HS1) et du deuxième élément de capteur (HS2);
- le fait de déterminer un angle de rotation relatif (RR) associé à l'axe rotatif (AX) sur la base des valeurs de capteur (PX1, PX2, PY1, PY2, PZ1, PZ2) d'au moins l'un du premier élément de capteur (HS1) et du deuxième élément de capteur (HS2);
- le fait de déterminer une information de position longitudinale (LP) de l'aimant annulaire (RM) par rapport à l'axe rotatif (AX) sur la base des valeurs de capteur (PX1, PX2, PY1, PY2, PZ1, PZ2) à la fois du premier élément de capteur (HS1) et du deuxième élément de capteur (HS2); et
- le fait de déterminer un angle de rotation absolu (AR) associé à l'axe rotatif (AX) sur la base de l'angle de rotation relatif (RR) et de l'information de position longitudinale (LP), l'angle de rotation absolu (AR) couvrant une plage de plus d'une rotation complète.

15. Procédé selon la revendication 14,
dans lequel le fait de déterminer l'angle de rotation absolu (AR) comprend le fait de déterminer un angle de décalage (R0) sur la base de l'information de position longitudinale (LP) et de déterminer l'angle de rotation absolu (AR) en additionnant l'angle de décalage (R0) et l'angle de rotation relatif (RR).

## FIG 1

## FIG 2

A-A'

## FIG 3

B-B'

KY

N

AX

Z

x y

RM

S

HS1, HS2

## FIG 4

IC

VY11 VY12        VY21 VY22

VX11        VX13    VX21        VX23

HZ11 HZ12        HZ21 HZ22

HZ13 HZ14        HZ23 HZ24

VX12        VX14    VX22        VX24

VY13 VY14        VY23 VY24

HS1            HS2

## FIG 5

RO=720°  RO=360°  RO=0°  RO=-360° RO=-720°

## FIG 6

FIG 7

**EP 2 706 326 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100163333 A
- US 20090322320 A
- DE 10348914